# DEMANDE DE BREVET EUROPEEN

(11) **EP 3 252 341 A1**
(43) Date de publication de la demande: **06.12.2017**
(21) Numéro de dépôt: 17168934.2
(22) Date de dépôt: 02.05.2017
(51) Int. Cl.: F16H 3/091

(54) **BOITE DE VITESSES POUR VEHICULE AUTOMOBILE COMPORTANT UN DERNIER RAPPORT AVEC UN EMBRAYAGE INDEPENDANT**

(30) Priorité: 30.05.2016 FR 1654844
(71) Demandeur: PSA Automobiles SA, 78300 Poissy (FR)
(72) Inventeur: PLOE, Pierre, 92800 Puteaux (FR)

(57) **Abrégé**

Boîte de vitesses pour un véhicule automobile, comportant un arbre primaire (2) entraîné par un premier embrayage, qui peut être relié à un arbre secondaire (8) par une série de couples de pignons (22, 24, 26, 28) donnant chacun un rapport de démultiplication, et comportant un deuxième embrayage relié à un pignon monté libre (34) sur l'arbre primaire (2), qui est en prise sur un pignon de sortie (14) de l'arbre secondaire (8) pour former un dernier rapport supérieur, caractérisée en ce qu'elle comporte un arbre intermédiaire creux (36) ajusté sur l'arbre secondaire (8), supportant un pignon (24, 28) de chaque couple de la série de couples de pignons (22, 24, 26, 28), et un moyen d'engagement (30) permettant de lier l'arbre intermédiaire (36) avec l'arbre secondaire (8).

## Description

La présente invention concerne une boîte de vitesses pour un véhicule automobile, un procédé de commande de cette boîte de vitesses, ainsi qu'un véhicule automobile équipé d'une telle boîte de vitesses.

Les véhicules automobiles comportent généralement une boîte de vitesses reliant le moteur thermique aux roues motrices, comportant différents rapports de démultiplication permettant d'optimiser le fonctionnement de ce moteur.

Les boîtes de vitesses à commande manuelle disposées transversalement dans le véhicule, comportent généralement un embrayage en entrée lié à un arbre primaire qui peut entraîner un arbre secondaire parallèle par différents couples de pignons donnant les rapports de démultiplication. Chaque couple de pignons comporte un pignon libre sur son arbre, qui peut être lié à l'arbre par le coulissement axial d'un manchon de synchronisation.

L'arbre secondaire comporte un pignon de sortie, qui est constamment en prise avec la couronne portée par un différentiel de sortie répartissant le mouvement vers les deux roues motrices. Chaque changement de vitesse se fait après un débrayage, ce qui donne une rupture dans la transmission du couple.

Par la suite on appellera par convention côté avant le côté axial où se trouve le moteur thermique.

Une variante de ces boîtes de vitesses, présentée notamment par le document FR-A1-2973091, comporte cinq couples de pignons donnant de manière classique les cinq premiers rapports de démultiplication. Un deuxième embrayage d'entrée disposé en parallèle du premier, entraîne directement un pignon de sixième rapport monté libre sur l'arbre d'entrée du côté avant de la boîte de vitesses, qui est en prise sur le pignon de sortie de l'arbre secondaire.

De cette manière à partir d'un roulage sur le cinquième rapport de vitesse, en dégageant ce cinquième rapport et en fermant le deuxième embrayage on engage le sixième rapport qui entraîne directement le pignon de sortie de l'arbre secondaire, en prise lui-même sur la couronne du différentiel.

Toutefois le roulage sur le sixième rapport de vitesse implique une rotation permanente de l'arbre secondaire, alors que l'arbre primaire lié au premier embrayage qui est ouvert, est à l'arrêt. On a alors pour chaque couple de pignons du premier au cinquième rapport de vitesse, une forte différence de vitesse de rotation entre le pignon libre de ce couple et l'arbre le supportant.

Cette différence de vitesse qui est croissante en partant du cinquième rapport de vitesse vers le premier rapport, génère des frottements et une traînée du film d'huile dépendant de la vitesse du véhicule, alors que le sixième rapport de vitesse est généralement utilisé pour effectuer des grandes distances avec une vitesse du véhicule assez élevée. On obtient une perte de rendement importante, qui donne une consommation de carburant et des émissions de gaz polluants élevées.

La présente invention a notamment pour but d'éviter ces inconvénients de la technique antérieure.

Elle propose à cet effet une boîte de vitesses pour un véhicule automobile, comportant un arbre primaire entraîné par un premier embrayage, qui peut être relié à un arbre secondaire par une série de couples de pignons donnant chacun un rapport de démultiplication, et comportant un deuxième embrayage relié à un pignon monté libre sur l'arbre primaire, qui est en prise sur un pignon de sortie de l'arbre secondaire pour former un dernier rapport supérieur, cette boîte de vitesses étant remarquable en ce qu'elle comporte un arbre intermédiaire creux ajusté sur l'arbre secondaire, supportant un pignon de chaque couple de la série de couples de pignons, et un moyen d'engagement permettant de lier l'arbre intermédiaire avec l'arbre secondaire.

Un avantage de cette boîte de vitesses est que lors du roulage sur le dernier rapport supérieur en déliant l'arbre intermédiaire de l'arbre secondaire grâce au moyen d'engagement, on obtient à la fois l'arbre primaire et l'arbre intermédiaire qui étant libres peuvent tourner à une basse vitesse ou rester à l'arrêt, ce qui réduit fortement les frottements et les traînées dans cette boîte de vitesses.

Le roulage sur le dernier rapport se fait alors avec des frottements réduits ce qui améliore le rendement de la boîte de vitesses et diminue la consommation.

La boîte de vitesses selon l'invention peut de plus comporter une ou plusieurs des caractéristiques suivantes, qui peuvent être combinées entre elles.

Avantageusement, le moyen d'engagement comporte un manchon coulissant axialement.

Dans ce cas, le manchon coulissant comporte avantageusement des dispositifs de synchronisation de la vitesse.

En particulier, le manchon coulissant peut comporter une position axiale d'une extrémité prévue pour engager l'avant dernier rapport de démultiplication, une position axiale de l'autre extrémité prévue pour engager le dernier rapport supérieur, et la position centrale prévue pour engager tous les autres rapports.

Selon un mode de réalisation, le moyen d'engagement est disposé à l'extrémité arrière de l'arbre secondaire.

En particulier, le dernier rapport supérieur peut être un sixième rapport de démultiplication.

Dans ce cas, le couple de pignons du cinquième rapport de démultiplication peut être disposé juste à l'arrière de roulements arrière de la boîte de vitesses, le moyen d'engagement étant disposé en arrière de ce couple de pignons.

L'invention a aussi pour objet un procédé de commande d'une boîte de vitesses comprenant l'une quelconque des caractéristiques précédentes, qui à partir d'un roulage sur l'avant dernier rapport de démultiplication, commande simultanément une fermeture du deuxième embrayage et une ouverture du premier embrayage, puis commande le moyen d'engagement pour délier l'arbre intermédiaire de l'arbre secondaire.

L'invention a de plus pour objet un procédé de commande d'une boîte de vitesses comprenant l'une quelconque des caractéristiques précédentes, qui pour des passages intermédiaires entre le premier et l'avant-dernier rapport de démultiplication, commande simultanément une fermeture partielle du deuxième embrayage et une ouverture du premier embrayage, puis change le rapport de démultiplication, et enfin commande simultanément la fermeture du premier embrayage et l'ouverture du deuxième embrayage.

L'invention a de plus pour objet un véhicule automobile comportant une boîte de vitesses reliant un moteur thermique aux roues motrices, qui comprend l'une quelconque des caractéristiques précédentes.

L'invention sera mieux comprise et d'autres caractéristiques et avantages apparaîtront plus clairement à la lecture de la description ci-après donnée à titre d'exemple et de manière non limitative, en référence aux dessins annexés dans lesquels :
- la figure 1 est un dessin d'une boîte de vitesses selon l'invention, présentant l'engagement du cinquième rapport de démultiplication ;
- la figure 2 est un schéma du manchon d'engagement du cinquième et du sixième rapport ; et
- la figure 3 est un dessin de cette boîte de vitesses présentant l'engagement du sixième rapport de démultiplication.

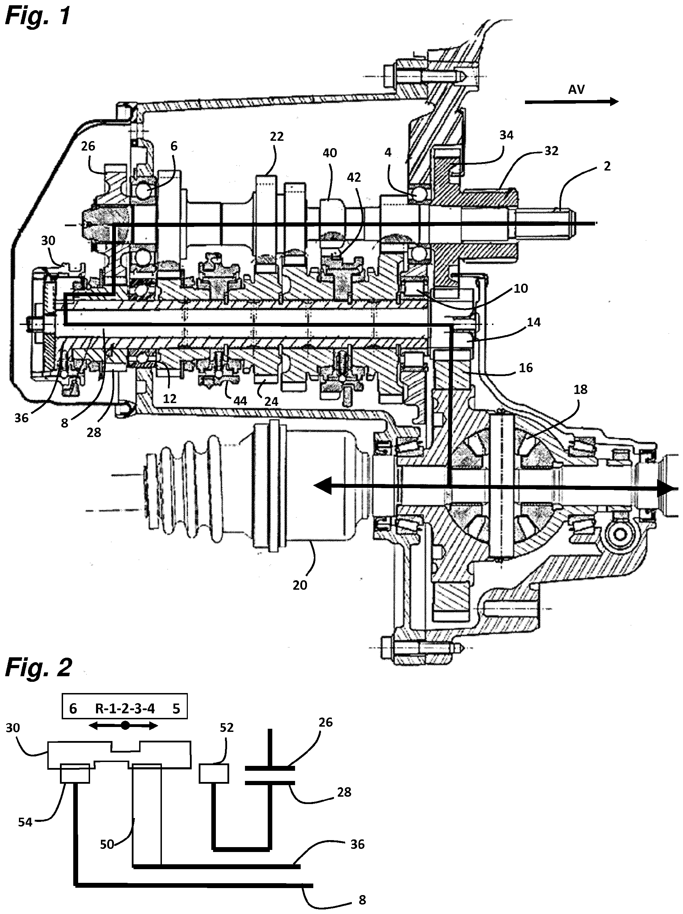

La figure 1 présente une boîte de vitesses comportant un côté avant indiqué par la flèche notée « AV », comprenant un arbre primaire 2 disposant de cannelures sur son extrémité avant prévues pour recevoir un disque d'un premier embrayage, entraînant par différents rapports de démultiplication un arbre secondaire 8 disposé parallèlement.

L'arbre primaire 2 porté par un premier roulement avant 4 et un premier roulement arrière 6 fixés dans le carter de la boîte de vitesses, comporte entre ces deux roulements quatre pignons fixes 22 en prise chacun avec un pignon libre 24 porté par l'arbre secondaire 8. Chaque couple de pignon 22, 24 constitue un rapport de démultiplication, qui va en partant du côté avant, du premier au quatrième rapport.

L'arbre secondaire 8 est porté par un deuxième roulement avant 10 et un deuxième roulement arrière 12, qui sont chacun aligné transversalement avec le premier roulement avant 4 ou le premier roulement arrière 6 de l'arbre primaire 2.

L'arbre secondaire 8 comporte en avant du deuxième roulement avant 10, un pignon de sortie 14 en prise avec une couronne 16 portée par un différentiel 18, répartissant le mouvement vers deux arbres de roue 20.

L'arbre secondaire 8 est inséré dans un arbre creux intermédiaire 36 le couvrant entièrement à partir du pignon de sortie 14 jusqu'à son extrémité arrière, qui peut librement tourner sur cet arbre secondaire. Les deuxièmes roulements 10, 12 ainsi que tous les pignons libres 24, 28 sont ajustés sur l'arbre intermédiaire 36.

Entre les pignons libres 24 du premier et du deuxième rapport, et entre les pignons libres 24 du troisième et du quatrième rapport, un manchon de synchronisation 44 coulisse axialement d'un côté ou de l'autre pour lier l'un de ces pignons libres avec l'arbre intermédiaire 36 afin d'engager le rapport correspondant.

L'arbre primaire 2 supporte juste derrière le roulement arrière 6, un pignon fixe du cinquième rapport de démultiplication 26, qui est en prise avec un pignon libre 28 porté par l'arbre intermédiaire 36. Un troisième manchon de synchronisation coulissant 30 disposé en arrière du pignon libre du cinquième rapport 28, comporte de chaque côté un dispositif de synchronisation permettant d'engager le cinquième ou le sixième rapport.

L'arbre primaire 2 supporte entre les pignons fixes 22 du premier et du deuxième rapport de démultiplication, un pignon fixe de marche arrière 40 qui peut être en prise avec un pignon coulissant intermédiaire non représenté, lui-même constamment en prise avec une couronne 42 formée sur le contour extérieur du manchon de synchronisation 44 disposé axialement entre ces deux pignons fixes.

De cette manière par un coulissement du pignon intermédiaire pour l'engager sur le pignon fixe de marche arrière 40, donnant une inversion de sens de rotation supplémentaire, on réalise le rapport de marche arrière.

L'arbre primaire 2 comporte en avant du premier roulement avant 4 un pignon libre du sixième rapport de démultiplication 34, comportant un moyeu tourné vers l'avant présentant des cannelures 32 recevant un disque d'un deuxième embrayage non représenté, disposé parallèlement au premier embrayage.

Le pignon libre du sixième rapport 34 engrène directement avec le pignon de sortie 14 de l'arbre secondaire 8. Ce pignon libre du sixième rapport 34 et le pignon de sortie 14 sont enfermés dans un carter étanche à l'huile non représenté, permettant une lubrification de ces pignons avec l'huile intérieure de la boîte de vitesses.

La figure 2 présente le troisième manchon de synchronisation 30, comportant trois positions axiales commandant pour la position centrale le rapport de marche arrière et les rapports du premier au quatrième, pour la position à droite le rapport de cinquième et pour la position à gauche le rapport de sixième. Le troisième manchon de synchronisation 30 est toujours engagé sur un premier moyeu denté 50 fixé au bout de l'arbre intermédiaire 36, qui le guide.

Dans sa position centrale le troisième manchon de synchronisation 30 est engagé sur le premier moyeu denté 50, et sur un deuxième moyeu denté 54 fixé au bout de l'arbre secondaire 8 en arrière du premier moyeu. De cette manière on lie l'arbre intermédiaire 36 avec l'arbre secondaire 8 ajusté dedans, ce qui permet de passer le rapport de marche arrière et tous les rapports du premier au quatrième, qui vont entraîner l'arbre secondaire en passant par cet arbre intermédiaire.

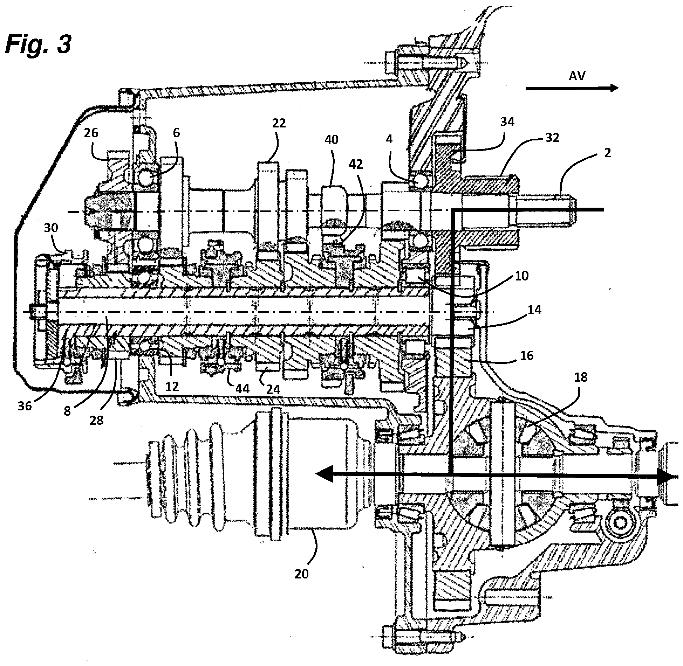

Les figures 1 et 3 présentent par une flèche le passage de couple, pour respectivement le cinquième et le sixième rapport de vitesse engagé.

Pour le passage du cinquième rapport, on déplace vers l'avant le troisième manchon de synchronisation 30 ce qui engage en plus un troisième moyeu denté 52 lié au pignon libre 28 du cinquième rapport de démultiplication. De cette manière on lie le pignon libre 28 du cinquième rapport de démultiplication avec l'arbre intermédiaire 36 et l'arbre secondaire 8, pour entraîner cet arbre secondaire avec le cinquième rapport.

Pour le passage du sixième rapport, on déplace vers l'extrémité arrière le troisième manchon de synchronisation 30, ce qui dégage le troisième moyeu denté 52 du cinquième rapport de démultiplication, puis le deuxième moyeu denté 54 de l'arbre secondaire 8.

Ensuite on engage le deuxième embrayage afin d'entraîner directement par le moteur thermique le pignon libre du sixième rapport de démultiplication 34, qui entraîne directement le pignon de sortie 14 de l'arbre secondaire 8, entraînant à son tour le différentiel de sortie 18.

On obtient alors un roulage sur le sixième rapport qui entraîne l'arbre secondaire 8, mais laisse libre l'arbre primaire 2 avec son embrayage d'entrée et l'arbre intermédiaire 36, qui peuvent rester à l'arrêt. De cette manière on évite une rotation inutile de ces deux arbres 2, 36, des pignons libres 24, 28 du premier au cinquième rapport, et des manchons de synchronisation 44 du premier au quatrième rapport, qui présentent des frottements et des traînées assez importantes à cause des différences de vitesse élevées que l'on peut constater. On obtient ainsi un bon rendement donnant une amélioration de la consommation de carburant et des émissions de gaz carbonique.

On peut en particulier à partir d'un roulage sur le cinquième rapport, progressivement fermer le deuxième embrayage et en même temps par un croisement ouvrir le premier embrayage afin d'obtenir un transfert de couple progressif du cinquième vers le sixième rapport, sans rupture du couple transmis comme pour une boîte de vitesses à double embrayages, ce qui est confortable.

Une fois le premier embrayage ouvert, on déplace le troisième manchon de synchronisation 30 vers l'arrière afin d'obtenir le rendement élevé pour le roulage sur ce sixième rapport. La descente du sixième vers le cinquième rapport se fait à l'inverse de la même manière, sans rupture de la transmission du couple.

On peut aussi pour tous les passages intermédiaires entre le premier et le cinquième rapport, en montée comme en descente de rapports, ouvrir le premier embrayage avec en même temps par un croisement une fermeture partielle du deuxième embrayage afin de transmettre un couple sur le sixième rapport tout en maintenant son glissement, puis successivement dégager le rapport précédent et engager le rapport suivant, et enfin réaliser le croisement inverse par une fermeture du premier embrayage avec en même temps l'ouverture du deuxième.

De cette manière on limite une rupture complète de transmission de couple pendant les passages des rapports intermédiaires, de manière croissante du premier au cinquième rapport.

On réalise ainsi facilement à partir d'une boîte de vitesses comportant cinq rapports, une boîte équipée de six rapports présentant peu de modification de son architecture. On notera en particulier que l'on a toujours un seul couple de pignons du cinquième rapport disposé en porte-à-faux, à l'arrière des roulements arrière 6, 12. On peut en particulier utiliser un outillage industriel de production prévu pour une boîte de vitesses manuelle, qui est peu modifié.

Le fonctionnement de la boîte de vitesses suivant l'invention peut être manuel, ou piloté automatiquement.

## Revendications

1. Boîte de vitesses pour un véhicule automobile, comportant un arbre primaire (2) entraîné par un premier embrayage, qui peut être relié à un arbre secondaire (8) par une série de couples de pignons (22, 24, 26, 28) donnant chacun un rapport de démultiplication, et comportant un deuxième embrayage relié à un pignon monté libre (34) sur l'arbre primaire (2), qui est en prise sur un pignon de sortie (14) de l'arbre secondaire (8) pour former un dernier rapport supérieur, **caractérisée en ce qu'**elle comporte un arbre intermédiaire creux (36) ajusté sur l'arbre secondaire (8), supportant un pignon (24, 28) de chaque couple de la série de couples de pignons (22, 24, 26, 28), et un moyen d'engagement (30) permettant de lier l'arbre intermédiaire (36) avec l'arbre secondaire (8).

2. Boîte de vitesses selon la revendication 1, **caractérisée en ce que** le moyen d'engagement (30) comporte un manchon coulissant axialement.

3. Boîte de vitesses selon la revendication 2, **caractérisée en ce que** le manchon coulissant comporte des dispositifs de synchronisation de la vitesse.

4. Boîte de vitesses selon la revendication 2 ou 3, **caractérisée en ce que** le manchon coulissant comporte une position axiale d'une extrémité prévue pour engager l'avant dernier rapport de démultiplication, une position axiale de l'autre extrémité prévue pour engager le dernier rapport supérieur, et la position centrale prévue pour engager tous les autres rapports.

5. Boîte de vitesses selon l'une quelconque des revendications précédentes, **caractérisée en ce que** le moyen d'engagement (30) est disposé à l'extrémité arrière de l'arbre secondaire (8).

6. Boîte de vitesses selon l'une quelconque des revendications précédentes, **caractérisée en ce que** le dernier rapport supérieur est un sixième rapport de démultiplication.

7. Boîte de vitesses selon les revendications 5 et 6, **caractérisée en ce que** le couple de pignons (26, 28) du cinquième rapport de démultiplication est disposé juste à l'arrière de roulements arrière (6, 12) de la boîte de vitesses, le moyen d'engagement (30) étant disposé en arrière de ce couple de pignons (26, 28).

8. Procédé de commande d'une boîte de vitesses selon l'une quelconque des revendications précédentes, **caractérisé en ce qu'**à partir d'un roulage sur l'avant dernier rapport de démultiplication, il commande simultanément une fermeture du deuxième embrayage et une ouverture du premier embrayage, puis il commande le moyen d'engagement (30) pour délier l'arbre intermédiaire (36) de l'arbre secondaire (8).

9. Procédé de commande d'une boîte de vitesses selon l'une quelconque des revendications 1 à 7, **caractérisé en ce que** pour des passages intermédiaires entre le premier et l'avant-dernier rapport de démultiplication, il commande simultanément une fermeture partielle du deuxième embrayage et une ouverture du premier embrayage, puis il change le rapport de démultiplication, et enfin il commande simultanément la fermeture du premier embrayage et l'ouverture du deuxième embrayage.

10. Véhicule automobile comportant une boîte de vitesses reliant un moteur thermique aux roues motrices, **caractérisé en ce que** cette boîte de vitesses est selon l'une quelconque des revendications 1 à 7.
